# EUROPÄISCHE PATENTANMELDUNG

(11) **EP 4 691 643 A1**
(43) Veröffentlichungstag der Anmeldung: **11.02.2026**
(21) Anmeldenummer: 25192854.5
(22) Anmeldetag: 30.07.2025
(51) Int. Cl.: B01L 9/00

(54) **BEHÄLTER ZUM HALTEN EINER MEHRZAHL VON PIPETTENSPITZEN**

(30) Priorität: 09.08.2024 DE 102024122814
(71) Anmelder: BRAND GMBH + CO KG, 97877 Wertheim (DE)
(72) Erfinder: Prokopp, Peter, 97877 Wertheim (DE); Schroth, Nicolas, 63456 Hanau (DE)
(74) Vertreter: Von Rohr Patentanwälte Partnerschaft mbB

(57) **Zusammenfassung**

Die Erfindung betrifft einen Behälter zum Halten einer Mehrzahl von Pipettenspitzen, umfassend eine einen Boden aufweisende Box, eine Halteeinrichtung, die mit der Box verbindbar ist und eine Mehrzahl von Aufnahmen zum Halten von Pipettenspitzen aufweist, und einen mit der Box verbindbaren Standfuß zur kippsicheren Handhabung der Box.

## Beschreibung

Die vorliegende Erfindung betrifft einen Behälter zum Halten einer Mehrzahl von Pipettenspitzen, wie dieser im Anspruch 1 definiert ist.

Pipettenspitzen der in Rede stehenden Art sind zur Kopplung mit einer Pipettiervorrichtung vorgesehen. Solche Pipettiervorrichtungen dienen zum Aufnehmen und Abgeben von Fluidvolumina mittels einer Verdrängereinrichtung, insbesondere zum wiederholten Dispensieren, Titrieren bzw. Pipettieren von Flüssigkeiten. Die Verdrängereinrichtung dient zur Erzeugung von Überdruck oder Unterdruck zum Ansaugen oder Ausstoßen von Flüssigkeiten. An die Verdrängereinrichtung kann eine Pipettenspitze oder können mehrere Pipettenspitzen luftdicht anbringbar sein. Jede Pipettenspitze wird üblicherweise mit der Verdrängereinrichtung mittels Steckverbindung verbunden. Dazu kann die Verdrängereinrichtung ein rohrförmiges, zylindrisch oder konisch ausgeführtes Endstück aufweisen, auf das die Pipettenspitze mit einer entsprechenden rohrförmigen Öffnung aufgesteckt wird. Die Verdrängereinrichtung und die Pipettenspitze können gemeinsam einen abgeschlossenen Luftraum bilden. Die Pipettenspitze ist von der Verdrängereinrichtung wieder trennbar bzw. abwerfbar. Pipettenspitzen sind typischerweise zur einmaligen Benutzung vorgesehen, so dass sie nach dem Trennen bzw. Abwerfen von der Verdrängereinrichtung in der Regel entsorgt bzw. zur Entsorgung gesammelt werden.

Unbenutzte Pipettenspitzen werden häufig in einem Behälter mit einem Deckel aufbewahrt, transportiert und Nutzern zum Gebrauch bereitgestellt. Solche Behälter sind zum Halten einer Mehrzahl von Pipettenspitzen ausgebildet, und zwar so, dass die Pipettenspitzen bei geöffnetem oder abgenommenem Deckel aus dem Behälter mittels einer Pipettiervorrichtung entnommen werden können, wobei die Pipettiervorrichtung, insbesondere deren Verdrängereinrichtung, in eine der Pipettenspitzen gesteckt werden kann. Dazu hat der Behälter eine Halteeinrichtung, die so ausgebildet ist, die Pipettenspitzen nebeneinander ausgerichtet in Aufnahmen bereitzuhalten.

Aus dem Dokument EP 3 774 053 A1 ist ein derartiger Behälter bekannt. Der bekannte Behälter umfasst eine Box mit einem Boden sowie eine Halteeinrichtung bzw. Tragplatte, die mit der Box verbindbar ist und eine Vielzahl von Aufnahmen zum Halten von Pipettenspitzen in einer Matrix-Anordnung aufweist. Der bekannte Behälter hat außerdem einen Deckel, der schwenkbar an der Box befestigt ist. Bei geöffnetem Deckel können Pipettenspitzen von oben in die Aufnahmen der Halteeinrichtung gesteckt werden, wobei die Pipettenspitzen - z. B. aufgrund eines sich nach oben verbreiternden Durchmessers oder eines Kragens - nicht durch die Aufnahmen fallen, sondern in der Halteeinrichtung gehalten werden. Eine oder mehrere Pipettenspitzen können mittels einer Pipettier- oder Dosiervorrichtung aus der Halteeinrichtung entnommen werden. Dazu wird die Dosiervorrichtung mit einer Koppelstelle oder mit mehreren Koppelstellen in eine obere Öffnung einer oder mehrerer Pipettenspitzen gesteckt. Nach dem Gebrauch können die Pipettenspitzen - üblicherweise mittels einer Abwerfereinrichtung der Dosiervorrichtung - wieder in Aufnahmen der Halteeinrichtung eingesetzt oder in ein anderes Behältnis abgegeben werden, um entsorgt zu werden. Besonders wichtig ist in diesem Zusammenhang, insbesondere im Hinblick auf die Arbeitssicherheit, die Gewährleistung einer kippsicheren Handhabung. Dazu sind bei dem bekannten Behälter Stützpfeiler vorgesehen, die integraler Bestandteil der Box und nicht abnehmbar sind. Nachteilig an dem bekannten Behälter ist, dass die Stützpfeiler die Auflage- bzw. Standfläche der Box nur geringfügig vergrößern, weshalb sie die Standfestigkeit der Box nur geringfügig verbessern. Außerdem verändern die Stützpfeiler die Stapelbarkeit der Box sowie die Standfläche der Box an sich, und zwar unveränderlich.

Aus dem Dokument WO 2017/031514 A1 ist ebenfalls ein Behälter zum Halten einer Mehrzahl von Pipettenspitzen bekannt. Dieser bekannte Behälter hat eine Aufnahmeschale mit einem Boden und mit vom Boden aufragenden Seitenwänden. Die Seitenwände umgrenzen eine Aufnahmeöffnung und definieren gemeinsam mit dem Boden einen Aufnahmeraum. Der Behälter hat außerdem einen Deckel, der die Aufnahmeöffnung der Aufnahmeschale in seiner Verschlussstellung abdeckt und abnehmbar an der Aufnahmeschale gehalten ist. Der Deckel ist als Adapterelement für die Aufnahmeschale ausgebildet. Am Deckel ist eine Positioniervorrichtung mit mehreren Positionierelementen vorgesehen. Der Deckel definiert in seinem äußeren Umfangsbereich eine normierte Standfläche. Die Aufnahmeschale ist bei einer von der Aufnahmeschale abgenommenen Freigabestellung des Deckels mit ihrem Boden am Deckel abgestützt und in dieser Adapterstellung mittels der Positionierelemente relativ bezüglich der durch den Deckel definierten Standfläche in einer Positionierstellung für eine automatisierte Probenverarbeitung positioniert ausgerichtet. Mithilfe des abnehmbaren Deckels kann die Aufnahmeschale mit ihrem Boden am Deckel abgestützt werden, indem der Deckel über den Boden der Aufnahmeschale gestülpt wird, um dadurch die Standfestigkeit der Aufnahmeschale zu verbessern. Nachteilig an der derartigen Verwendung des Deckels zur Abstützung der Aufnahmeschale ist, dass der Behälter in der Adapterstellung nicht mittels des Deckels geschlossen werden kann und die Pipettenspitzen somit äußeren Einflüssen ausgesetzt und nicht gegen Verschmutzung geschützt sind. Des Weiteren müssen Form und Größe des Deckels an Form und Größe des Bodens der Aufnahmeschale angepasst sein. Die Standfläche ist hier nur wenig vergrößert und das Risiko eines unbeabsichtigten Kippens des Behälters nur wenig reduziert. Darüber hinaus ist in der Adapterstellung eine Relativbewegung zwischen Deckel und Aufnahmeschale in vertikaler Richtung voneinander weg möglich, also nicht blockiert. Zusätzlich erfordert das Zustandebringen der form- und reibschlüssigen Verbindung des Deckels mit der Aufnahmeschale oftmals eine Feinarbeit bzw. einen komplexen manuellen Eingriff, da die Bauteile so bemessen sind, dass sie nur ein geringes Spiel aufweisen.

Der vorliegenden Erfindung liegt die technische Aufgabe zugrunde, einen Behälter zum Halten einer Mehrzahl von Pipettenspitzen zur Verfügung zu stellen, dessen Box mit einem nicht als Deckel ausgebildeten Standfuß verbindbar ist, welcher die Handhabung im mit der Box verbundenen Zustand, aber auch die Kippsicherheit im Allgemeinen verbessert und/oder die Nachteile des Standes der Technik vermeidet oder zumindest im Wesentlichen vermindert.

Die vorgenannte Aufgabe wird erfindungsgemäß dadurch gelöst, dass der Behälter zum Halten einer Mehrzahl von Pipettenspitzen
- eine einen Boden aufweisende Box,
- eine Halteeinrichtung, die mit der Box verbindbar ist und eine Mehrzahl von Aufnahmen zum Halten von Pipettenspitzen aufweist, und
- einen mit der Box verbindbaren Standfuß zur kippsicheren Handhabung der Box
umfasst.

Im Sinne der vorliegenden Erfindung soll unter dem Begriff "Standfuß" eine Basis- bzw. Stützstruktur verstanden werden, die verwendet wird, um ein Objekt zu tragen, zu stabilisieren und/oder ihm Halt zu geben, sodass das Objekt in seiner Verwendung sicher, insbesondere kippsicher, und aufrecht steht oder in einer bestimmten Position verbleibt. Vorzugsweise vergrößert der Standfuß die Standfläche des Objekts.

Vorzugsweise weist der Behälter einen Deckel auf, der lösbar mit der Box verbindbar ist. Bevorzugt ist der Deckel schwenkbar an der Box befestigt bzw. gelagert, um den Behälter schließen und öffnen zu können, wobei bei geöffnetem Behälter die Pipettenspitzen in der Halteeinrichtung zugänglich werden. Besonders bevorzugt ist der Deckel transparent ausgebildet, um den Inhalt der Box von außen identifizieren zu können.

Der Standfuß ist nicht als Deckel für die Box ausgebildet. Vielmehr ist der Standfuß separat vom Deckel, von der Halteeinrichtung und von der Box ausgebildet. Mittels des Standfußes kann die Standfläche des Behälters beliebig groß ausgebildet werden. Der Standfuß kann separat entsorgt, wiederverwendet oder neu oder zusätzlich erworben werden.

Weitere vorteilhafte Ausgestaltungen sind in den Unteransprüchen angegeben.

**In** einer bevorzugten Ausführungsform ist der Standfuß horizontal und vertikal formschlüssig mit der Box lösbar verbindbar, so dass eine Relativbewegung zwischen dem Standfuß und der Box in horizontaler und vertikaler Richtung blockiert ist. Der Standfuß löst sich bei einer Handhabung, die zum Kippen der Box führt, nicht von der Box. Auch beim Hochheben der Box löst sich der Standfuß sicher nicht von der Box.

Durch den Formschluss, welcher sowohl in vertikaler als auch in horizontaler Richtung erreichbar ist, ergibt sich eine sichere und stabile Verbindung der Box mit dem Standfuß. Dies verhindert ein Wackeln oder Kippen und ist der für automatisierte Prozesse erforderlichen Präzision zuträglich. Aber auch im Allgemeinen sorgt diese formschlüssige Verbindung dafür, dass die Inhalte des Behälters stabil und sicher aufbewahrt werden können.

Ein weiterer Vorteil des lösbar verbindbaren Formschlusses ist es, dass eine schnelle und unkomplizierte Verbindung der Box mit dem Standfuß durchführbar ist und die Handhabung dadurch signifikant erleichtert wird. Dies begünstigt ebenfalls die Flexibilität im Gebrauch und bei der Lagerung.

Vorzugsweise ist der Standfuß mit der Box durch eine Drehbewegung der Box - besonders bevorzugt um eine vertikale Achse - relativ zum Standfuß vertikal formschlüssig verbindbar. Dies bietet den Vorteil, dass zum Lösen der vertikal formschlüssigen Verbindung eine Drehung erforderlich und somit ein unbeabsichtigtes Lösen ausgeschlossen ist.

Besonders bevorzugt ist der Standfuß mit der Box in einer initialen Verbindungsposition verbindbar, in welcher eine Relativbewegung zwischen dem Standfuß und der Box in vertikaler Richtung aufeinander zu und in horizontaler Richtung blockiert ist.

Der Vorteil einer initialen Verbindungsposition liegt darin, dass durch die Blockierung der horizontalen Bewegung sichergestellt wird, dass die Box präzise auf dem Standfuß positioniert werden kann, bevor sie durch eine Drehbewegung endgültig fixiert wird. Dies reduziert das Risiko von Fehlanpassungen und möglichen Schäden an der Box und dem Standfuß. Des Weiteren trägt bereits die initiale Verbindungsposition dazu bei, dass die Box während des Verbindens nicht verrutscht oder kippt, was besonders hilfreich ist, wenn die Box bereits mit Pipettenspitzen gefüllt ist.

Besonders bevorzugt ist der Standfuß mit der Box in einer finalen Verbindungsposition verbindbar, in welcher eine Relativbewegung zwischen dem Standfuß und der Box in vertikaler und horizontaler Richtung blockiert ist.

Vorzugsweise sind der Standfuß und die Box ausgehend von der initialen Verbindungsposition in die finale Verbindungsposition mittels einer Drehbewegung - vorzugsweise um eine vertikale Achse - relativ zueinander bewegbar.

Besonders vorteilhaft an der auszuführenden Drehbewegung ist, dass die Handhabung deutlich erleichtert wird, da die Box mit dem Standfuß lediglich mit einer Hand in einen vertikal und horizontal formschlüssig verbunden Zustand gebracht werden kann. Es ist nicht erforderlich, dass der Standfuß in die entgegengesetzte Richtung der Box gedreht wird.

Bevorzugt ist die Drehbewegung der Box relativ zum Standfuß von der initialen Verbindungsposition zu der finalen Verbindungsposition mittels einer Wand des Standfußes begrenzt.

Dadurch ergibt sich der Vorteil, dass die Box präzise, konsistent und wiederholbar positioniert werden kann, da die Box immer genau in der durch die Wand vorgegeben Position stoppt. Des Weiteren ist dies einer einfachen Handhabung zuträglich, da die Wand den Vorgang intuitiv und benutzerfreundlich macht. Dadurch, dass der Benutzer durch die Begrenzung der Wand schnell und sicher weiß, wann die Box korrekt positioniert ist, wird der Verbindungsprozess im Vergleich zum Stand der Technik signifikant vereinfacht und insbesondere beschleunigt. Zusätzlich wird durch die Wand eine Überdrehung der Box verhindert, was Beschädigungen an der Box oder an dem Standfuß vorbeugt und letztendlich die Lebensdauer der Teile verlängert.

**In** einer bevorzugten Ausführungsform ist die Drehbewegung der Box relativ zum Standfuß von der initialen Verbindungsposition zur finalen Verbindungsposition mittels einer Umrandung des Standfußes geführt bzw. definiert.

Ein Vorteil dieser Umrandung ist, dass dem Benutzer die auszuführende Drehbewegung bereits vorgegeben ist und dementsprechend die Benutzerfreundlichkeit und intuitive Benutzung zusätzlich erhöht wird.

Insbesondere weist der Standfuß in einer Ausführungsform auf einer Oberseite eine Markierung auf, die die initiale Verbindungsposition markiert und/oder einer Vergrößerung der Kontur des Bodens der Box entspricht und derart auf der Oberseite des Standfußes angeordnet ist, dass sie sichtbar ist, wenn der Standfuß mit der Box in der initialen Verbindungsposition verbunden ist.

Die Markierung auf der Oberseite des Standfußes bietet hinsichtlich der Handhabung den Vorteil, dass dem Benutzer die genaue Positionierung der initialen Verbindungsposition der Box auf dem Standfuß erleichtert wird durch eine klare Orientierungshilfe und damit verhindert wird, dass wiederholt justiert bzw. angesetzt werden muss. Dadurch werden Schäden und Abnutzungen durch eine falsche Bedienung reduziert. Zusätzlich ist die oberseitige Markierung auf dem Standfuß auch der für die Herstellung der lösbaren Verbindung benötigten Zeit zuträglich, da die initiale Verbindungsposition für den Benutzer ohne Weiteres durch die Markierung sichtbar ist.

Eine weitere bevorzugte Ausführungsform zeichnet sich dadurch aus, dass zur horizontal und vertikal formschlüssigen Verbindung zwischen der Box und dem Standfuß der Boden der Box auf einer Unterseite eine, vorzugsweise im Wesentlichen zylinderförmige, Vertiefung aufweist und der Standfuß auf einer Oberseite einen, vorzugsweise im Wesentlichen zylinderförmigen, Vorsprung aufweist. Die Vertiefung der Box ist in dieser bevorzugten Ausführungsform komplementär zum Vorsprung des Standfußes und zur Aufnahme des Vorsprungs des Standfußes ausgebildet. Durch die komplementär zueinander ausgebildeten Teile lässt sich die Box - zusätzlich zur Markierung der initialen Verbindungsposition - leichter mit dem Standfuß verbinden und ausrichten.

Besonders bevorzugt bilden die Vertiefung der Box und der Vorsprung des Standfußes einen Bajonettverschluss, insbesondere wobei der Boden der Box mindestens einen in die Vertiefung ragenden Eingriffsabschnitt und der Vorsprung des Standfußes mindestens einen nach außen ragenden Gegeneingriffsabschnitt aufweist. Der Bajonettverschluss bietet den Vorteil, dass eine schnell herstell- und lösbare mechanische Verbindung der Teile erreicht werden kann und somit ein vollständiger Formschluss sowohl in horizontaler als auch in vertikaler Richtung erzielt werden kann.

Eine weitere vorteilhafte Ausführungsform ist dadurch gekennzeichnet, dass die Halteeinrichtung mindestens eine von außen sichtbare Anzeigeeinrichtung aufweist, die an einer Umrandung der Halteeinrichtung angeformt ist. Dadurch, dass die Anzeigeeinrichtung von außen sichtbar ist, muss der Deckel der Box vorteilhafterweise nicht geöffnet werden, um Informationen der Anzeigeeinrichtung, z. B. über die gehaltenen Pipettenspitzen, zu erhalten. Im Stand der Technik wird der Behälter (z. B. die Box) oftmals mit einem Etikett beklebt, welches über die bereitgestellten Pipettenspitzen Auskunft gibt. Durch die vorzugsweise integrale Anformung an der Halteeinrichtung ergibt sich der Vorteil, dass die lösbare Halteeinrichtung beispielsweise von Box zu Box transferiert werden kann, ohne dass die Angaben zum Inhalt der Halteeinrichtung verloren gehen oder die Box neu etikettiert werden muss.

Vorzugsweise ist die Anzeigeeinrichtung durch ein Laserverfahren, ein Prägeverfahren und/oder ein Ink-Jet-Verfahren mit Angaben zur Identifizierung von in der Halteeinrichtung gehaltenen Pipettenspitzen beschriftbar. Dadurch, dass die Beschriftung ohne zusätzlichen Stoffeintrag durchgeführt werden kann, ergibt sich der Vorteil, dass die Halteeinrichtung - im Hinblick auf die Entsorgung - sortenrein bleibt. Das Etikett selbst, dessen Handhabung und das spätere Entsorgen kann mithilfe dieser Anzeigeeinrichtung erspart bleiben.

Insbesondere weist der Behälter einen mit der Box lösbar verbindbaren Deckel auf, der eine Ausnehmung zur Aufnahme eines Bereichs der Anzeigeeinrichtung aufweist. Vorzugsweise ist die Anzeigeeinrichtung im geschlossenen Zustand des Deckels fluchtend mit einer Vorderseite des Deckels angeordnet.

Vorzugsweise weist der Standfuß auf seiner Unterseite rutschfeste Mittel auf, um ein Verrutschen zu verhindern. Dies können unter anderem Gummifüße oder -pads sein, Filzgleiter, Saugfüße oder eine spezielle Beschichtung, um eine rutschfeste Oberfläche zu erzeugen.

Weitere Vorteile, Merkmale, Eigenschaften und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen oder deren Rückbeziehung.

Es zeigt:
- Fig. 1: schematisch in einer perspektivischen Explosionsansicht eine bevorzugte Ausführungsform eines erfindungsgemäßen Behälters mit einem lösbar verbindbaren Deckel,
- Fig. 2: schematisch in einer Untersicht die Box des Behälters aus Fig. 1,
- Fig. 3: schematisch in einer Draufsicht den Standfuß des Behälters aus Fig. 1,
- Fig. 4: schematisch in einer perspektivischen Ansicht den Behälter aus Fig. 1 in einem Zustand, in dem die Box und der Standfuß nicht miteinander verbunden sind.
- Fig. 5: schematisch in einer perspektivischen Ansicht den Behälter aus Fig. 1 in einer initialen Verbindungsposition der Box mit dem Standfuß,
- Fig. 6: schematisch in einer perspektivischen Ansicht den Behälter aus Fig. 1 in einer finalen Verbindungsposition der Box mit dem Standfuß,
- Fig. 7: schematisch in einer Draufsicht den Behälter aus Fig. 5 in der initialen Verbindungsposition der Box mit dem Standfuß,
- Fig. 8: schematisch in einer Draufsicht den Behälter aus Fig. 6 in der finalen Verbindungsposition der Box mit dem Standfuß,
- Fig. 9: schematisch einen Schnitt entlang der Achse VII-VII des Behälters 1 in einer finalen Verbindungsposition aus Fig. 8,
- Fig. 10: schematisch in einer Frontansicht den Behälter aus Fig. 9,
- Fig. 11: schematisch in einer perspektivischen Ansicht den Behälter aus Fig. 6 mit geöffnetem Deckel und mit in der Halteeinrichtung gehaltenen Pipettenspitzen,
- Fig. 12: schematisch in einer perspektivischen Ansicht den Behälter aus Fig. 11 ohne die Halteeinrichtung,
- Fig. 13: schematisch in einer perspektivischen Draufsicht die Innenansicht der Box des Behälters aus Fig. 1 und
- Fig. 14: schematisch in einer perspektivischen Ansicht die Halteeinrichtung des Behälters aus Fig. 1.

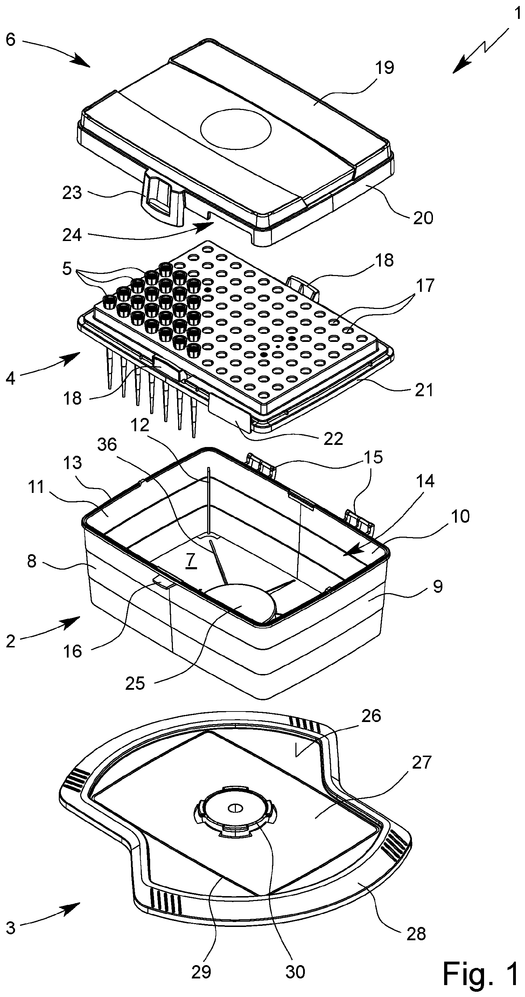

Fig. 1 zeigt schematisch in einer perspektivischen Explosionsansicht eine bevorzugte Ausführungsform eines erfindungsgemäßen Behälters 1. Der Behälter 1 umfasst eine Box 2, einen mit der Box 2 lösbar verbindbaren Standfuß 3 zur kippsicheren Handhabung, eine Halteeinrichtung 4 zum Halten einer Mehrzahl von Pipettenspitzen 5 sowie einen Deckel 6. Die Halteeinrichtung 4 und der Deckel 6 sind jeweils mit der Box 2 lösbar verbindbar.

Die Box 2 umfasst ihrerseits einen Boden 7 sowie jeweils vom Boden 7 aufragend ausgerichtete Seitenwände 8-11. **In** den Ecken, also an den Stellen, an denen zwei Seitenwände 8-11 aufeinanderstoßen, sind vorzugsweise Aussteifungen 12 vorgesehen, um die Stabilität der Box 2 zu erhöhen. Die vom Boden 7 distanzierten Enden der Seitenwände 8-11 bilden umlaufend einen Rand 13. Die Seitenwände 8-11 definieren gemeinsam mit dem Boden 7 einen Aufnahmeraum 14.

Bei der hier dargestellten und bevorzugten Ausführungsform verbreitert sich die Box 2 vom Boden 7 der Box 2 aus in Richtung des Randes 13. Das bedeutet, dass die Kontur des Randes 13 größer ist als die Kontur des Bodens 7. Die Box 2 entspricht vorzugsweise der Form eines umgedrehten Pyramidenstumpfes ohne Grundfläche, wobei die Deckfläche dem Boden 7 (mit einer näherungsweise rechteckigen Form) entspricht und alle vier Mantelflächen durch die Seitenwände 8-11 gebildet sind.

An der rückwärtigen Seitenwand 10 sind hier Befestigungsmittel 15 vorgesehen, um den Deckel 6 lösbar mit der Box 2 verbinden zu können und schwenkbar zu lagern. Bei der dargestellten Ausführungsform sind die Befestigungsmittel 15 jeweils als Scharnier ausgebildet. **In** anderen Ausführungsformen kann die Befestigung des Deckels 6 allerdings auch als Schnapp-, Riegel- und/oder Hakenverschluss ausgebildet sein.

An dem vom Boden 7 distanzierten Ende der vorderen Seitenwand 8 befindet sich vorzugsweise mittig eine Lasche 16. Mithilfe der Lasche 16 kann der Deckel 6 geöffnet und geschlossen werden bzw. in einer Schließstellung fixiert werden.

Die Box 2 weist hier eine von der Unterseite des Bodens 7 in den Aufnahmeraum 14 der Box 2 ragende Vertiefung 25 auf, welche vorzugsweise im Wesentlichen zylinderförmig ausgeprägt ist.

Die Vertiefung 25 verfügt vorzugsweise über mindestens mehrere Aussteifungen 36, die radial von der insbesondere zylindrischen Vertiefung 25 ausgehen.

Diese Aussteifungen 36 sind besonders bevorzugt paarweise diametral angeordnet, um die Stabilität der Box 2 zu verbessern.

Der Aufnahmeraum 14 der Box 2 ist insbesondere zur Aufnahme der Halteeinrichtung 4 und ggfs. darin gehaltenen Pipettenspitzen 5 geeignet. Die Halteeinrichtung 4 weist eine Mehrzahl von Aufnahmen 17 zum Halten von Pipettenspitzen 5 auf. Die Halteeinrichtung 4 ist lösbar mit der Box 2 verbindbar.

Bei der hier dargestellten und bevorzugten Ausführungsform weist die Halteeinrichtung 4 dazu an zwei gegenüberliegenden Seiten Hakenelemente 38 auf, wobei die Hakenelemente 38 nach außen gerichtete (nicht dargestellte) Rasten haben, die in (in den Zeichnungen nicht erkennbare) Aussparungen an der Innenseite der vorderen Seitenwand 8 bzw. der hinteren Seitenwand 10 der Box 2 in vertikaler Richtung formschlüssig eingreifen. Durch Drücken einer jeweiligen Betätigungseinrichtung 18 werden die Hakenelemente 38 elastisch gebogen, so dass die Rasten aus der jeweiligen Aussparung bewegt werden, wodurch der vertikale Formschluss aufgehoben ist und die Halteeinrichtung 4 von der Box 2 gelöst werden kann.

Die Halteeinrichtung 4 weist eine Umrandung 21 auf, die die Aufnahmen 17 umlaufend begrenzt. An der Umrandung 21 ist eine Anzeigeeinrichtung 22 integral angeformt.

Der Deckel 6 umfasst bei diesem Ausführungsbeispiel eine Deckelwand 19 sowie im Umfangsbereich der Deckelwand 19 von dieser abstehende Deckelseitenwände 20. An der hinteren Deckelseitenwand 20 weist der Deckel 6 Mittel auf, mit denen der Deckel 6 schwenkbar an der Box 2 bzw. den Befestigungsmitteln 15 der Box 2 gelagert werden kann. An der vorderen Deckelseitenwand 20 ist ein Verschluss 23 angeformt, welcher mit der Lasche 16 der Box 2 zusammenwirken kann und den Deckel 6 in dessen Schließstellung fixiert. Zum Lösen der Fixierung des Verschlusses 23 bzw. des Deckels 6 muss der Verschluss 23 über die Lasche 16 gezogen werden.

Zusätzlich weist hier der Deckel 6 an der vorderen Deckelseitenwand 20 eine Ausnehmung 24 zur Aufnahme eines Bereichs der an der Umrandung 21 angeformten Anzeigeeinrichtung 22 auf.

Besonders bevorzugt ist der Deckel im Wesentlichen transparent ausgebildet, damit der Inhalt des Behälters 1 sichtbar ist.

Bei der dargestellten und bevorzugten Ausführungsform weist der Standfuß 3 auf einer Oberseite 26 einen vertieften Aufnahmebereich 27 zur Aufnahme der Box 2 auf. Der vertiefte Aufnahmebereich 27 ist von einer vorzugsweise umlaufenden, erhöhten Umrandung 28 umgeben.

Des Weiteren weist der Standfuß 3 oberseitig eine Markierung 29 auf, die einer Vergrößerung der Kontur des Bodens der Box 2 entspricht und eine initiale Verbindungsposition zwischen der Box 2 und dem Standfuß 3 markiert.

Zur lösbaren Verbindung der Box 2 mit dem Standfuß 3 weist der Standfuß 3 auf seiner Oberseite 26 einen Vorsprung 30 auf, der vorzugsweise im Wesentlichen zylinderförmig und komplementär zur Vertiefung 25 der Box 2 ausgebildet ist.

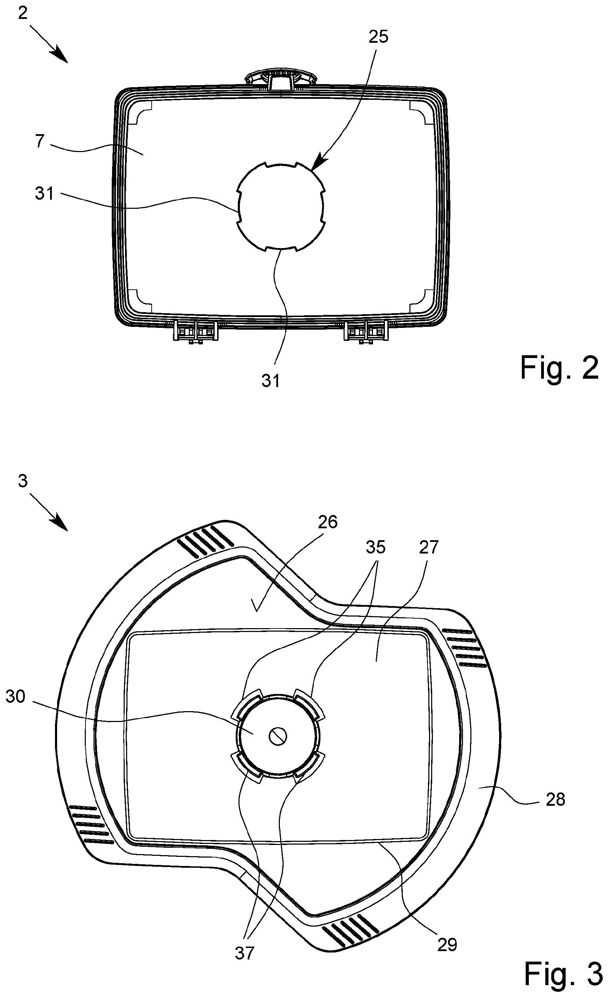

Fig. 2 zeigt die Box 2 schematisch in einer Untersicht. Hier sind die Unterseite des Bodens 7 der Box 2 sowie die Vertiefung 25 erkennbar. Der Boden 7 der Box 2 weist mindestens einen in die Vertiefung 25 ragenden Eingriffsabschnitt 31 auf.

In dem hier dargestellten Ausführungsbeispiel ragen vier Eingriffsabschnitte 31 radial in die Vertiefung 25. Die Eingriffsabschnitte 31 sind vorzugsweise leistenartig bzw. stegartig ausgebildet. Wie in der Untersicht aus Fig. 2 erkennbar ist, sind die Eingriffsabschnitte 31 am Umfang der Vertiefung 25 verteilt angeordnet und paarweise diametral angeordnet. Die Eingriffsabschnitte 31 sind beabstandet vom Boden der Vertiefung 25 angeordnet, um ein Hintergreifen zu ermöglichen. Die Außenseite der Eingriffsabschnitte 31 ist in der bevorzugten Ausführung fluchtend mit der Unterseite des Bodens 7 angeordnet.

In Fig. 3 ist der Standfuß 3 mit seiner Oberseite 26 in einer Draufsicht gezeigt. Der zur Vertiefung 25 komplementär ausgebildete Vorsprung 30 weist mindestens einen Gegeneingriffsabschnitt 37 auf, allerdings ragt dieser Gegeneingriffsabschnitt 37 radial nach außen.

In dem hier dargestellten Ausführungsbeispiel sind vier Gegeneingriffsabschnitte 37 paarweise diametral am Umfang bzw. auf der Kontur des Vorsprungs 30 angeordnet. Die Gegeneingriffsabschnitte 37 sind vorzugsweise leistenartig bzw. stegartig ausgebildet. Die Gegeneingriffsabschnitte 37 sind beabstandet von der Oberseite 26 des Standfußes 3 angeordnet, um ein Hintergreifen der Eingriffsabschnitte 31 des Bodens 7 der Box 2 zu ermöglichen. Die Oberseite der Gegeneingriffsabschnitte 37 ist vorzugsweise fluchtend mit der Oberseite des Vorsprungs 30 angeordnet. Darüber hinaus weist der Standfuß 3 noch entsprechend der Anzahl an Eingriffsabschnitten 31 des Bodens 7 der Box 2 Aussparungen 35 auf.

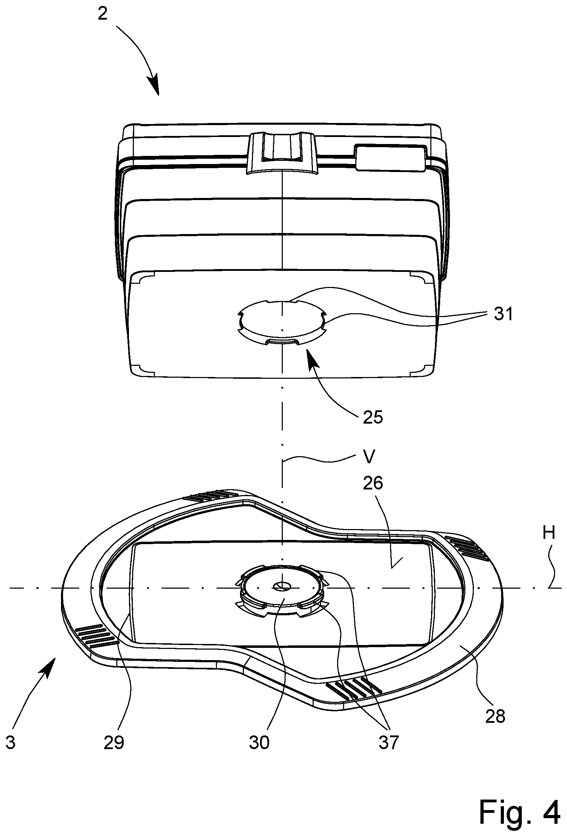

Fig. 4 zeigt die Box 2 und den Standfuß 3 in einer perspektivischen Ansicht vor deren Zusammenfügen. Die Box 2 kann entlang einer vertikalen Achse V mit der Unterseite des Bodens 7 mittels einer vertikalen Relativbewegung auf die Oberseite 26 bzw. in den von der Umrandung 28 berandeten Aufnahmebereich 27 des Standfußes 3 gesetzt werden, um den Standfuß 3 horizontal und vertikal formschlüssig mit der Box 2 lösbar zu verbinden.

Für eine Bedienperson gibt die Markierung 29 Aufschluss darüber, wie die Box 2 auf dem Standfuß 3 positioniert werden sollte.

Im Sinne der vorliegenden Erfindung soll unter den Formulierungen "Bewegung in horizontaler bzw. vertikaler Richtung" eine Bewegung entlang der horizontalen bzw. der vertikalen Achse H bzw. V verstanden werden.

Dabei greift der Vorsprung 30 des Standfußes 3 in die komplementär ausgebildete Vertiefung 25 der Box 2 ein. Die wechselseitig vorhandenen und kongruent passenden Eingriffsabschnitte 31 des Bodens 7 der Box 2 bzw. Gegeneingriffsabschnitte 37 des Vorsprungs 30 sind durch die vertikale Relativbewegung entlang der vertikalen Achse V aneinander vorbei bewegbar. Diese dann erreichte Position kennzeichnet die initiale Verbindungsposition.

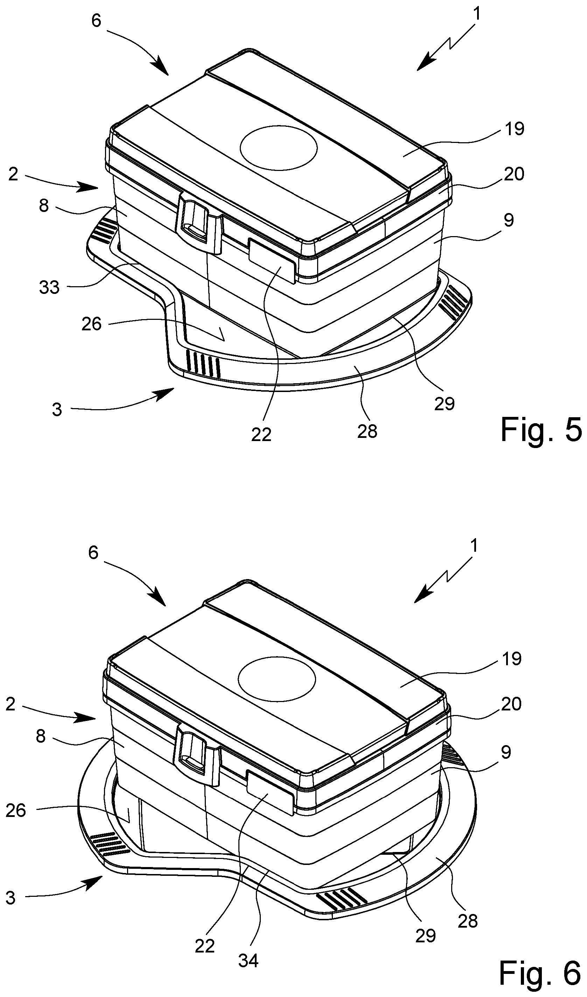

In Fig. 5 ist die initiale Verbindungsposition des erfindungsgemäßen Behälters 1 bzw. der Box 2 und dem Standfuß 3 gezeigt. Die initiale Verbindungsposition wird durch die Markierung 29 auf der Oberseite 26 des Standfußes 3 vorgegeben, um das Verbinden der Box 2 mit dem Standfuß 3 zu erleichtern. In der initialen Verbindungsposition ist eine Relativbewegung zwischen der Box 2 und dem Standfuß 3 in vertikaler Richtung aufeinander zu sowie in horizontaler Richtung durch den Formschluss blockiert. Die Markierung 29 auf der Oberseite 26 der initialen Verbindungsposition ist selbst noch in der initialen Verbindungsposition der Box 2 mit dem Standfuß 3 sichtbar, da die Markierung 29 einer Vergrößerung der Kontur des Bodens 7 der Box 2 entspricht.

Von der initialen Verbindungsposition kann der Standfuß 3 mit der Box 2 in eine finale Verbindungsposition gebracht werden. Die finale Verbindungsposition ist in den Fig. 6, 8 und 9 gezeigt.

Die finale Verbindungsposition bzw. der vertikale Formschluss lässt sich durch eine Drehbewegung α der Box 2 relativ zum Standfuß 3 um die vertikale Achse V erreichen. Das Verbindungsprinzip entspricht in der hier dargestellten Ausführungsform vorzugsweise einem Bajonettverschluss.

Vorzugsweise handelt es sich bei der Drehbewegung α um eine gezielte Bewegung zur Herstellung einer funktionalen Verbindung.

Besonders bevorzugt wird, insbesondere ausschließlich, durch die Drehbewegung α die formschlüssige Verbindung zwischen Box 2 und Standfuß 3, insbesondere gegen axiales Trennen von Box 2 und Standfuß 3, erreicht.

Die auszuführende Drehbewegung α bedarf keines komplexen manuellen Eingriffs und kann mit nur einer Hand durchgeführt werden, wobei die Drehbewegung α durch die Konstruktion des Standfußes 3 begrenzt ist. Der vertiefte Aufnahmebereich 27 ist umlaufend von einer erhöhten Umrandung 28 umgeben. Die Umrandung 28 bildet eine vorzugsweise senkrecht zum Aufnahmebereich 27 stehende Wand 32, die als Führung und Anschlag für die Box 2 fungiert. Die Drehbewegung α ist durch die Wand 32 begrenzt.

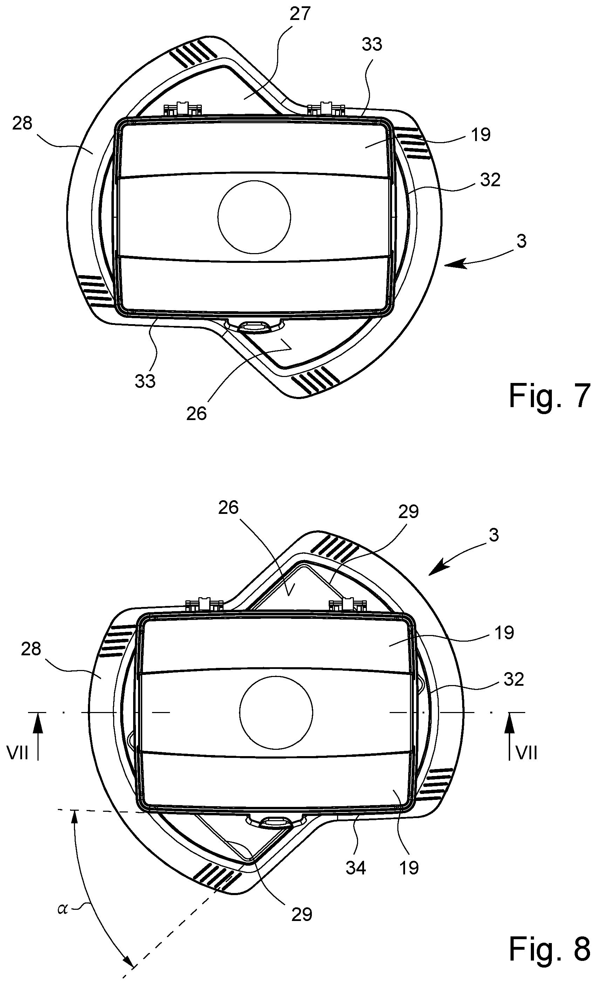

Der Teil der Seitenwände 8 und 10 der Box 2, der mit der Umrandung 28 des Standfußes 3 in der initialen Verbindungsposition in direktem Kontakt steht, bezeichnet einen initialen Anschlagsbereich 33. Dieser initiale Anschlagsbereich 33 begrenzt die zur Erreichung der finalen Verbindungsposition auszuführende Drehbewegung α auf lediglich eine mögliche Drehrichtung. Der initiale Anschlagsbereich 33 ist in den Fig. 5 und 7 erkennbar. Fig. 7 stellt eine Draufsicht der Box 2 mit dem Standfuß 3 in der initialen Verbindungsposition aus Fig. 5 dar.

Die finale Verbindungsposition der Box 2 mit dem Standfuß 3 ist in Fig. 6 gezeigt. Wie im Vergleich mit Fig. 5 zu erkennen ist, befindet sich die Box nicht mehr innerhalb der Markierung 29, also nicht mehr in der initialen Verbindungsposition. In der finalen Verbindungsposition ist eine Relativbewegung zwischen dem Standfuß 3 und der Box 2 in vertikaler und horizontaler Richtung blockiert durch die kongruent zueinander ausgebildeten Eingriffsabschnitte 31 des Bodens 7 der Box 2 und der Gegeneingriffsabschnitte 37 des Vorsprungs 30, die nun durch die Drehbewegung α in einer vertikalen Ebene liegen und einen Formschluss bilden. Die Eingriffsabschnitte 31 des Bodens 7 der Box 2 hintergreifen die Gegeneingriffsabschnitte 37 des Vorsprungs 30 und fügen sich in die Aussparungen 35 des Standfußes 3 ein.

Der Teil der Seitenwände 8 und 10 der Box 2, der mit der Umrandung 28 des Standfußes 3 in der finalen Verbindungsposition in direktem Kontakt steht, bezeichnet einen finalen Anschlagsbereich 34. Dieser finale Anschlagsbereich 34 begrenzt die zur Erreichung der initialen Verbindungsposition auszuführende Drehbewegung α in lediglich eine mögliche Drehrichtung. Der finale Anschlagsbereich 34 ist in den Figuren 6 und 8 erkennbar. Fig. 8 stellt eine Draufsicht der Box 2 mit dem Standfuß 3 in der finalen Verbindungsposition aus Fig. 6 dar.

In Fig. 8 ist die auszuführende Dreh- bzw. Verschlussbewegung der Box 2 relativ zum Standfuß 3 gezeigt. Die Drehbewegung α der Box 2 relativ zum Standfuß 3 von der initialen Verbindungsposition zu der finalen Verbindungsposition ist mittels der erhöhten Umrandung 28 des Aufnahmebereichs 27 des Standfußes 3 vorgegeben.

Die Drehbewegung α beträgt in dieser Ausführungsform maximal 45 Grad, bedingt durch die Anzahl der hintereinandergreifenden Eingriffsabschnitte 31 und Gegeneingriffsabschnitte 37. Die Drehbewegung α entspricht maximal dem Quotienten aus 360 Grad und der Anzahl an ineinandergreifenden Eingriffsabschnitten 31 und Gegeneingriffsabschnitten 37.

In anderen Ausführungsformen beträgt der Winkel der Drehbewegung α vorzugsweise 45 bis 180 Grad.

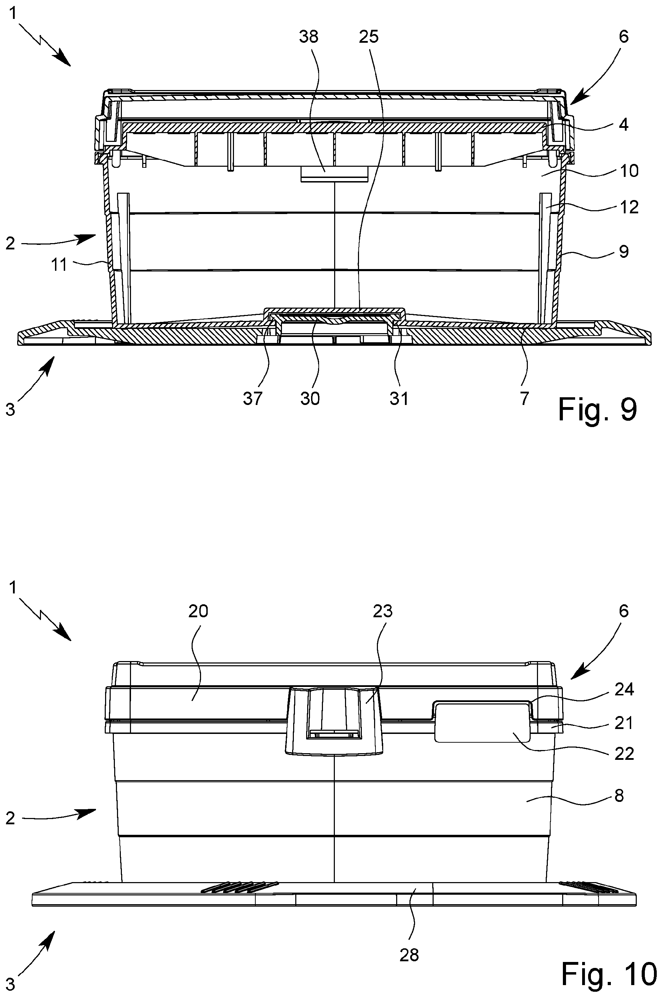

Fig. 9 zeigt den Behälter 1 in der finalen Verbindungsposition im Schnitt entlang der Achse VII-VII aus Fig. 8. Hier ist zu erkennen, dass die Vertiefung 25 der Box 2 sowie der Vorsprung 30 des Standfußes 3 in Kombination mit den nach innen ragenden Eingriffsabschnitten 31 bzw. den nach außen ragenden Gegeneingriffsabschnitten 37 einen Bajonettverschluss bilden und den Standfuß 3 mit der Box 2 in der finalen Verbindungsposition formschlüssig in horizontaler und vertikaler Richtung lösbar verbinden.

In Fig. 10 ist der Behälter 1 in einer Frontansicht gezeigt. Die Anzeigeeinrichtung 22 ist vorzugsweise an einer Vorderseite der Umrandung 21 angeformt und weist im Wesentlichen die Form eines Rechtecks auf. In anderen Ausführungsformen kann die Anzeigeeinrichtung 22 auch als Quadrat oder Trapez ausgeführt sein. Der Deckel 6 weist an seiner vorderseitigen Deckelseitenwand 20 eine Ausnehmung 24 auf zur Aufnahme eines Bereichs der Anzeigeeinrichtung 22.

In anderen Ausführungsformen kann aber auch keine Ausnehmung 24 für die Anzeigeeinrichtung 22 vorgesehen sein, in diesem Fall ist die Anzeigeeinrichtung 22 bevorzugt so an der Umrandung 21 angeformt, dass ein wesentlicher Teil der Anzeigeeinrichtung 22 sich in Richtung des Bodens 7 der Box 2 erstreckt.

Vorzugsweise ist die Anzeigeeinrichtung 22 bei in die Box 2 eingesetzter Halteeinrichtung 4 von außen sichtbar.

Besonders bevorzugt ist die Anzeigeeinrichtung 22 bei in die Box 2 eingesetzter Halteeinrichtung 4 und geschlossenem Deckel 6 von außen sichtbar.

Die Anzeigeeinrichtung 22 ist durch ein Laserverfahren, ein Prägeverfahren oder ein Ink-Jet-Verfahren mit Angaben zur Identifizierung von in der Halteeinrichtung 4 gehaltenen Pipettenspitzen 5 beschriftbar.

Die Angaben bzw. die Beschriftung werden bzw. wird vorzugsweise beim Bestücken der Halteeinrichtung 4 mit Pipettenspitzen 5 angebracht. Die Angaben beziehen sich auf die in diesem Behälter 1 bevorrateten Pipettenspitzen 5. Pipettenspitzen 5, die steril/unsteril, mit oder ohne Filter und unterschiedlicher Länge (aufnehmbares/transferierbares Volumen) sind, haben individuelle Artikelnummern und Bezeichnungen.

Die Angaben enthalten daher vorzugsweise mindestens eine der folgenden Informationen zur Identifizierung der bevorrateten Pipettenspitzen 5: Artikelnummer, Bezeichnung, Matrix-/Strich-/Farb-Code und/oder Chargennummer.

Besonders bevorzugt ist die Anzeigeeinrichtung 22 - vorzugsweise bei in die Box 2 eingesetzter Halteeinrichtung 4 - von außen sichtbar, damit es für die Bedienperson schnell und einfach ersichtlich ist, was sich im Aufnahmeraum 14 der Box 2 befindet.

Im geschlossenen Zustand des Deckels 6 ist die Anzeigeeinrichtung 22 vorzugsweise fluchtend mit der vorderseitigen Deckelseitenwand 20 angeordnet.

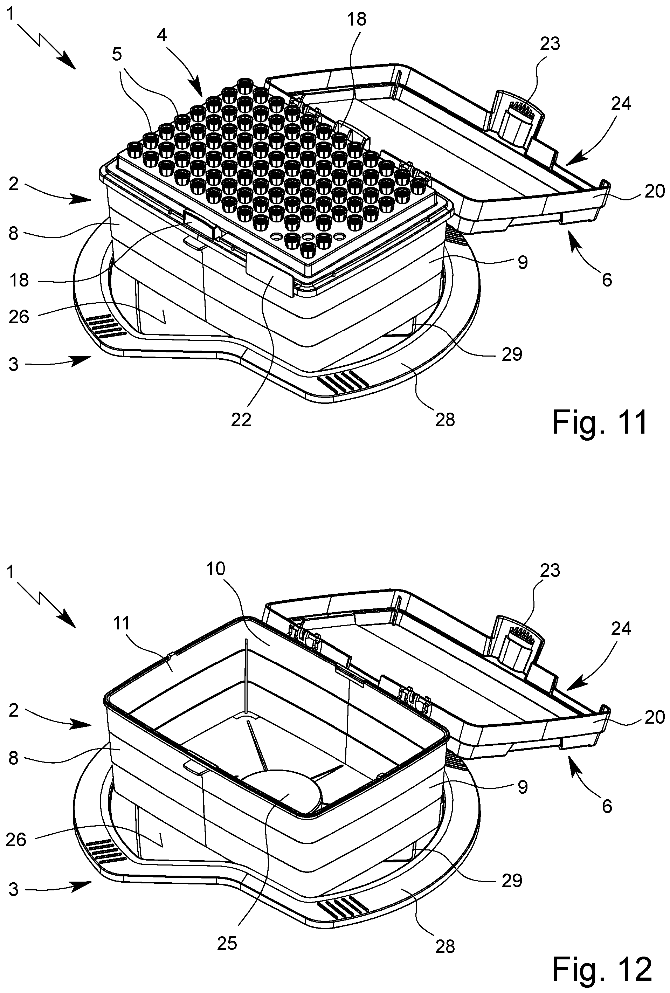

Fig. 11 zeigt den erfindungsgemäßen Behälter 1 mit geöffnetem Deckel 6 und einer in die Box 2 eingesetzten Halteeinrichtung 4, die mit einer Vielzahl von Pipettenspitzen 5 bestückt ist, in einer perspektivischen Ansicht. Die Box 2 befindet sich in der finalen Verbindungsposition mit dem Standfuß 3. In dieser Position ist die Box 2 mit dem Standfuß 3 horizontal und vertikal formschlüssig verbunden und dementsprechend komplett kippsicher einsatzfähig. Das heißt, dass in diesem

Zustand der Deckel 6 einhändig mittels des Verschlusses 23 geöffnet und aufgeschwenkt werden kann, die Halteeinrichtung 4 mit Pipettenspitzen 5 bestückt werden kann, mindestens eine Pipette in eine der Pipettenspitzen 5 gesteckt werden kann, die Halteeinrichtung 4 durch Zusammendrücken der Betätigungseinrichtungen 18 aus der Box 2 entnommen werden kann und eine neue mit Pipettenspitzen 5 bestückte Halteeinrichtung 4 in die Box 2 eingesetzt werden kann. Die Box 2 und vor allem die Entnahme der Pipettenspitzen 5 ist mit dem gekoppelten Standfuß 3 kippsicher handhabbar. Auch beim Pipettieren in einer Sicherheitswerkbank hinter einer Glasscheibe mit ungünstiger Orientierung der Pipette zu den Pipettenspitzen ist beim Aufsteckvorgang die Kippsicherheit durch den Standfuß 3 gegeben. Dies ist insbesondere von Vorteil, da im gezeigten Ausführungsbeispiel die Pipettenspitzen 5 lose in den Aufnahmen 17 stecken und beim Umkippen der Box 3 herausfallen würden.

In Fig. 12 ist der Behälter 1 mit geöffnetem Deckel 6 in der finalen Verbindungsposition der Box 2 mit dem Standfuß 3 gezeigt. Im Gegensatz zu Fig. 11 ist in Fig. 12 keine mit Pipettenspitzen 5 bestückte Halteeinrichtung 4 mit der Box 2 verbunden. Ein Auswechseln der Halteeinrichtung 4 ist in dem in Fig. 12 dargestellten Zustand ohne Einschränkungen möglich, die kippsichere Handhabung wird in keiner Weise durch die Halteeinrichtung 4 beeinflusst. Mit der Box 2 können verschiedene Halteeinrichtungen 4 lösbar verbunden werden.

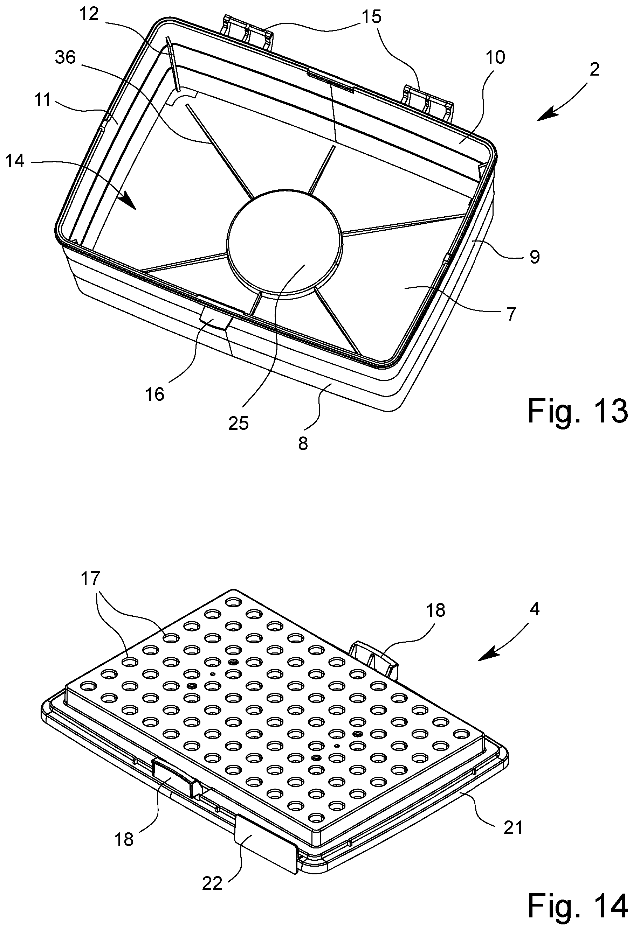

Fig. 13 zeigt eine perspektivische Ansicht der Box 2 ohne den mit der Box 2 formschlüssig und lösbar verbindbaren Standfuß 3. Des Weiteren ist der lösbar verbindbare Deckel 6 von den Befestigungsmitteln 15 der Box 2 getrennt. Die fehlende Halteeinrichtung 4 eröffnet den Blick auf den Aufnahmeraum 14 der Box 2, speziell auf die in den Aufnahmeraum 14 ragende Vertiefung 25 und die paarweise diametral davon ausgehenden Aussteifungen 12.

In Fig. 14 ist die Halteeinrichtung 4 mit einer Mehrzahl von Aufnahmen 17 zum Halten von Pipettenspitzen 5 in einer perspektivischen Ansicht gezeigt. Die Anzeigeeinrichtung 22 ist an der Umrandung 21 angeformt, vorzugsweise an der - im mit der Box verbundenen Zustand - Vorderseite der Halteeinrichtung 4. Die Halteeinrichtung ist durch das Drücken der Betätigungseinrichtungen 18 von der Box 2 lösbar.

Besonders bevorzugt wird die Box 2, der Standfuß 3, die Halteeinrichtung 4 und/oder der Deckel 6 aus einem thermoplastischen Kunststoff, insbesondere Polypropylene, Polyethylene, Polybutylenterephthalate, Polystyrene und/oder biologisch abbaubare Kunststoffe, in einem Spritzguss-Verfahren hergestellt, um die Sortenreinheit zu gewährleisten.

### Bezugszeichenliste:

| | | | |
|---|---|---|---|
| 1 | Behälter | 22 | Anzeigeeinrichtung von 4 |
| 2 | Box von 1 | 23 | Verschluss von 6 |
| 3 | Standfuß von 1 | 24 | Ausnehmung von 6 |
| 4 | Halteeinrichtung von 1 | 25 | Vertiefung von 2 |
| 5 | Pipettenspitzen | 26 | Oberseite von 3 |
| 6 | Deckel von 1 | 27 | Aufnahmebereich von 3 |
| 7 | Boden von 2 | 28 | Umrandung von 3 |
| 8 | vordere Seitenwand von 2 | 29 | Markierung von 3 |
| 9 | Seitenwand von 2 | 30 | Vorsprung von 3 |
| 10 | hintere Seitenwand von 2 | 31 | Eingriffsabschnitt von 7 |
| 11 | Seitenwand von 2 | 32 | Wand von 28 |
| 12 | Aussteifung von 2 | 33 | initialer Anschlagsbereich |
| 13 | Rand von 2 | 34 | finaler Anschlagsbereich |
| 14 | Aufnahmeraum von 2 | 35 | Aussparung von 3 |
| 15 | Befestigungsmittel von 2 | 36 | Aussteifung von 25 |
| 16 | Lasche von 2 | 37 | Gegeneingriffsabschnitt von 30 |
| 17 | Aufnahmen von 4 | 38 | Hakenelement von 4 |
| 18 | Betätigungseinrichtung von 4 | V | vertikale Achse |
| 19 | Deckelwand von 6 | H | horizontale Achse |
| 20 | Deckelseitenwände von 6 | α | Drehbewegung |
| 21 | Umrandung von 4 | | |

## Patentansprüche

1. Behälter zum Halten einer Mehrzahl von Pipettenspitzen (5), umfassend
- eine einen Boden (7) aufweisende Box (2),
- eine Halteeinrichtung (4), die mit der Box (2) verbindbar ist und eine Mehrzahl von Aufnahmen (17) zum Halten von Pipettenspitzen (5) aufweist, und
- einen mit der Box (2) verbindbaren Standfuß (3) zur kippsicheren Handhabung der Box (2).

2. Behälter nach Anspruch 1, wobei der Behälter (1) einen Deckel (6) aufweist, der lösbar mit der Box (2) verbindbar ist, vorzugsweise wobei der Deckel (6) schwenkbar an der Box (2) befestigt bzw. gelagert ist.

3. Behälter nach Anspruch 1 oder 2, wobei der Standfuß (3) horizontal und vertikal formschlüssig mit der Box (2) lösbar verbindbar ist, so dass eine Relativbewegung zwischen dem Standfuß (3) und der Box (2) in horizontaler und vertikaler Richtung blockiert ist.

4. Behälter nach einem der vorhergehenden Ansprüche, wobei der Standfuß (3) mit der Box (2) durch eine Drehbewegung (α) - vorzugsweise um eine vertikale Achse V - der Box (2) relativ zum Standfuß (3) vertikal formschlüssig verbindbar ist.

5. Behälter nach einem der vorhergehenden Ansprüche, wobei
- der Standfuß (3) mit der Box (2) in einer initialen Verbindungsposition verbindbar ist, in welcher eine Relativbewegung zwischen dem Standfuß (3) und der Box (2) in vertikaler Richtung aufeinander zu und in horizontaler Richtung blockiert ist,
- der Standfuß (3) mit der Box (2) in einer finalen Verbindungsposition verbindbar ist, in welcher eine Relativbewegung zwischen dem Standfuß (3) und der Box (2) in vertikaler Richtung und in horizontaler Richtung blockiert ist, und
- der Standfuß (3) und die Box (2) ausgehend von der initialen Verbindungsposition in die finale Verbindungsposition mittels einer Drehbewegung (α) relativ zueinander bewegbar sind.

6. Behälter nach Anspruch 5, wobei die Drehbewegung (α) der Box (2) relativ zum Standfuß (3) von der initialen Verbindungsposition zu der finalen Verbindungsposition mittels einer Wand (32) des Standfußes (3) begrenzt ist.

7. Behälter nach Anspruch 5 oder 6, wobei die Drehbewegung (α) der Box (2) relativ zum Standfuß (3) von der initialen Verbindungsposition zur finalen Verbindungsposition mittels einer Umrandung (28) des Standfußes (3) geführt bzw. vorgegeben ist.

8. Behälter nach einem der Ansprüche 5 bis 7, wobei der Standfuß (3) auf einer Oberseite (26) eine Markierung (29) aufweist, die die initiale Verbindungsposition markiert und/oder einer Vergrößerung der Kontur des Bodens (7) der Box (2) entspricht und derart auf der Oberseite (26) des Standfußes (3) angeordnet ist, dass sie sichtbar ist, wenn der Standfuß (3) mit der Box (2) in der initialen Verbindungsposition verbunden ist.

9. Behälter nach einem der vorhergehenden Ansprüche, wobei zur horizontal und vertikal formschlüssigen Verbindung zwischen der Box (2) und dem Standfuß (3)
- der Boden (7) der Box (2) auf einer Unterseite eine, vorzugsweise im Wesentlichen zylinderförmige, Vertiefung (25) aufweist,
- der Standfuß (3) auf einer Oberseite (26) einen, vorzugsweise im Wesentlichen zylinderförmigen, Vorsprung (30) aufweist und
- die Vertiefung (25) der Box (2) komplementär zum Vorsprung (30) des Standfußes (3) und zur Aufnahme des Vorsprungs (30) des Standfußes (3) ausgebildet ist.

10. Behälter nach Anspruch 9, wobei die Vertiefung (25) der Box (2) und der Vorsprung (30) des Standfußes (3) einen Bajonettverschluss bilden, insbesondere wobei der Boden (7) der Box (2) mindestens einen in die Vertiefung (25) ragenden Eingriffsabschnitt (31) aufweist und der Vorsprung (30) des Standfußes (3) mindestens einen nach außen ragenden Gegeneingriffsabschnitt (37) aufweist.

11. Behälter nach einem der vorhergehenden Ansprüche, wobei die Halteeinrichtung (4) mindestens eine von außen sichtbare Anzeigeeinrichtung (22) aufweist, die an einer Umrandung (21) der Halteeinrichtung (4) angeformt ist.

12. Behälter nach Anspruch 11, wobei die Anzeigeeinrichtung (22) durch ein Laserverfahren, ein Prägeverfahren mit und/oder ein Ink-Jet-Verfahren Angaben zur Identifizierung von in der Halteeinrichtung (4) gehaltenen Pipettenspitzen (5) beschriftbar bzw. beschriftet ist.

13. Behälter nach Anspruch 11 oder 12, wobei der Behälter (1) einen mit der Box (2) lösbar verbindbaren Deckel (6) aufweist, der eine Ausnehmung (24) zur Aufnahme eines Bereichs der Anzeigeeinrichtung (22) aufweist, und wobei, vorzugsweise, die Anzeigeeinrichtung (22) im geschlossenen Zustand des Deckels (6) fluchtend mit einer Vorderseite des Deckels (6) angeordnet ist.
